# EUROPEAN PATENT APPLICATION

(11) **EP 4 563 868 A1**
(43) Date of publication of application: **04.06.2025**
(21) Application number: 23220262.2
(22) Date of filing: 27.12.2023
(51) Int. Cl.: F16L 55/07, B01D 19/00

(54) **IMPROVED SYSTEM FOR UNDERGROUND AIR RELEASE FROM UNDERGROUND PIPELINES**

(30) Priority: 30.11.2023 US 202318565557; 30.11.2023 IL 30901523
(71) Applicant: Mekorot Water Company Ltd., 671340 Tel-Aviv (IL)
(72) Inventor: FRENKEL, Levy, 7835809 Ashkelon (IL); GELMAN, Elena, 7923139 Rehovot (IL); BLEICH, Sivan, 3716815 Pardes Hanna Karkur (IL); SORECK, Moshe, 4636708 Herzliya (IL); SHIRI, Mordechay, 7845715 Ashkelon (IL); PAKER, Igor, 4840099 Rosh Ha'ayin (IL); SUED, Oded, 2017000 Atzmon Segev (IL); HELFMAN-COHEN, Yael, 3093016 Zichron Yaakov (IL); LEVI, Tomer, 8554500 Kibbutz Tlalim (IL); PINHAS, Aharon, 8415525 Be'er Sheva (IL)
(74) Representative: Betten & Resch

(57) **Abstract**

The invention provides an improved system for underground release of air or gas from underground pipelines. The system is able to withstand pressures higher than 12Atm, and in some instances up to 30 Atm, without structural failure. The system comprises a selectively permeable membrane, located underground and secured in fluid and vapor communication with an underground pipeline. The selectively permeable membrane allows passage of air and gas therethrough, while substantially prevents passage of aqueous fluids therethrough. The system includes an impermeable mechanical support, located in the vicinity above the selectively permeable membrane.

## Description

### FIELD OF THE INVENTION

The invention broadly relates to structural elements for water and wastewater, and more particularly, relates to a means to eliminate air or gasses from within underground pipelines. Non-limiting examples of underground pipelines are water pipelines and wastewater pipelines.

### BACKGROUND

Water pipes and wastewater pipes are typically placed underground, to allow water delivery to all end consumers, and allow removal of wastewater. Underground placement protects pipes from tampering or damage and prevents waste of expensive real-estate area in urban areas, for pipe structures.

During active water pumping for water delivery, and especially when the terrain is not level, unwanted dissolved air, is released into the water pipes. The presence of air effectively lowers the volume of the pipe lumen and creates air whirlpools that represent considerable energy loss for water authorities. Air eddies lower the efficiency of pumping equipment, and damage sensors.

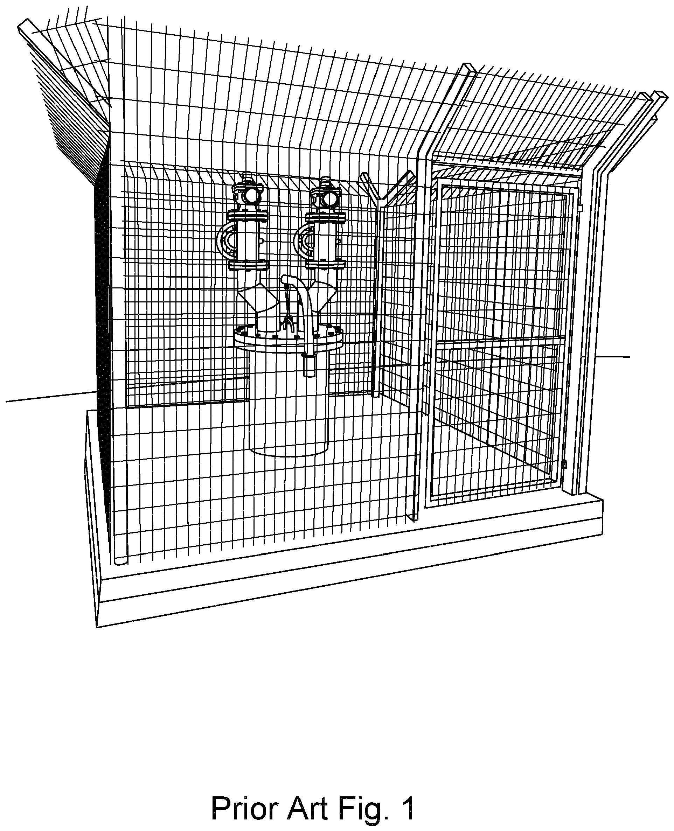

Prior art methods for removing air from within underground pipes, require installation of numerous automatic air release valves at set distances along the pipeline. The specialized air release valves are mounted on aboveground vertical pipes, as shown in Prior Art Fig. 1. The aboveground vertical pipe portions are undesirable in crowded urban environments: they are typically placed recurrently every 700-1000 meters upon the pipeline, and typically take up an area of at least six m², including fencing or enclosure to prevent vandalism or tampering. It would be preferable to avoid this waste of marketable space and allow placement of structures that are more aesthetic than air release valves.

The need exists for a method of air or gas release from underground pipelines, to minimize installation of aboveground air release valves.

Remote Prior Art from other fields: One-way permeable membranes have been used in unrelated fields, such as in cardiopulmonary bypass machines, for disinfection of solutions, and for adding moisture for indoor climate control. However, these materials have not been used to date in water pipelines, for underground air/gas release, along the length of the pipeline.

While porous hydrophobic membranes have been used in other fields for oxygenation, or oxygen removal, typical selectively permeable membranes used for such purposes cannot withstand the high liquid entry pressure that is found in high pressure water mains and are thus inappropriate. WO2022/254434, by the present inventors, disclosed a system primarily containing porous membranes for selective removal of air or gasses, however, the system was best suited to pipeline pressures of up to 12Atm. In contrast, the present invention provides a solution for pipeline pressures of 12-30Atm, and pertains mostly to non-porous membranes.

Extensive experimentation was necessary to develop the present invention, which is capable of withstanding high pressures, while providing underground selective removal of air or gas from within an underground pipeline.

### SUMMARY OF THE INVENTION

In a general overview of the invention, the present invention provides a means and a method to release trapped air from underground high pressure pipelines (such as water and wastewater pipelines). The invention alleviates the prior art need for external and often expensive, above ground pipe valves and fittings, that require maintenance and protection from vandalism and theft.

The invention provides a system for underground release of air or gas from underground pipelines, comprising:
a rigid conduit located underground, the rigid conduit providing fluid and vapor communication between an underground pipeline and between a selectively permeable membrane;
a selectively permeable membrane, located underground and secured at an upper region of the rigid conduit, the membrane in fluid and vapor communication with an underground pipeline, wherein the selectively permeable membrane allows passage of air and gas therethrough, while substantially prevents passage of aqueous fluids therethrough;
an impermeable mechanical support located in the vicinity above the selectively permeable membrane.

In one presently preferred embodiment, the impermeable mechanical support is a blind flange.

Optionally, the system comprises a valve located beneath the selectively permeable membrane, wherein the valve may be closed during maintenance of the system, to prevent fluid leakage from within the pipeline.

In some embodiments, the selectively permeable membrane is formed of a material selected from: PTMSP, PVDF, PTFE, PDMS, VVHP, pPE, Chitin, Chitosan, HDPE, Pertex^{®}, polyphenylene oxide; polyphenylene sulfide.

In some instances, the selectively permeable membrane is designed to withstand pressure higher than 12Atm.

Furthermore, the selectively permeable membrane is a non-porous separation membrane. In such case, in one embodiment, the selectively permeable membrane is a high free volume polymer material.

Optionally, the selectively permeable membrane further comprises at least one coating selected from: a water resistance coating; and a coating that provides mechanical durability.

Moreover, the system may further comprise a support member located above the selectively permeable membrane, wherein the support member provides mechanical reinforcement to the selectively permeable membrane; and the support member is a permeable guard net. In one option, the guard net comprises a mesh, having pores of 25-150 microns providing air and gas permeation, and the guard net is formed of a material selected from: fabric, a plastic, and stainless steel. In such instances, optionally, the selectively permeable membrane, or the guard net, or an additional membrane, are coated to prevent biofouling, wherein the anti biofouling coating is selected from: antibacterial colloidal particles of silver; antibacterial colloidal particles of copper; carbon nanotubes; and anti-bacterial polypeptides.

Still further, the selectively permeable membrane allows passage therethrough of nitrogen and at least one of: oxygen, argon, and carbon dioxide.

Optionally, the gas permeability and the diameter of the selectively permeable membrane is such to allow flow through the membrane of approximately 0.25 L air / 1 km pipe/ day, and wherein the membrane diameter is selected to provide the flow therethrough.

Furthermore, wherein the selectively permeable membrane is a porous hydrophobic membrane having a mean pore size of 0.5-0.005 micron. In such cases, optionally at least one side of the membrane is externally coated with a coating formed of a nonporous gas-permeable material.

These and other advantages of the invention are described further in the Detailed Description of the invention hereinbelow.

### Glossary

In the present invention, the terms "air", and "gas" are used interchangeably in relation to components that may pass through a selectively permeable membrane. These terms refer to components typically found in air, in any formulation, or in any phase of matter. One or more of such components may pass through a selectively permeable membrane. Non-limiting examples include: nitrogen, oxygen, argon, carbon dioxide, and trace components found in air.

In the present invention, the term "fluid communication" and "vapor communication", are used to describe the relation between the selectively permeable membrane and the underground pipeline. These terms indicate that fluid, air or gas may flow bidirectionally between the underground pipeline and the underside of the selectively permeable membrane.

In the present invention, the term "aqueous fluid" refers to a solution in which the solvent is water; or refers to water in any degree of purity. Non-limiting examples include drinking water and wastewater.

### BRIEF DESCRIPTION OF THE DRAWINGS

The present invention is illustrated by way of example in the figures of the accompanying drawings, in which like references indicate similar elements and in which:
Fig. 1 is a Prior Art Aboveground Air Release Valve apparatus.
Fig. 2 is a perspective view of the system of the invention is shown.
Fig. 3 is an exploded view of the invention.
Fig. 4 is a schematic side view showing airflow during use of the system of the invention.

### DETAILED DESCRIPTION OF THE INVENTION

In the following detailed description, numerous specific details are set forth to provide a thorough understanding of the present invention. There is no intention to limit the invention to the details of construction and the arrangement of the components set forth in the following description or illustrated in the drawings. The invention is capable of other embodiments or of being practiced or carried out in various ways. Also, it is to be understood that the phraseology and terminology employed herein are for the purpose of description and should not be regarded as limiting.

In a general overview, the system of the invention discloses novel use, of selectively permeable membranes, located recurrently along underground pipelines. The membranes allow continuous passive release of air or gasses therethrough, from within the pipeline, while preventing exit of water. Such membranes are placed and held underground, in fluid communication and/or vapor communication with the underground pipelines, to alleviate the need for aboveground air release, and thus grant savings in materials, space, and energy.

In some instances, the pressure within the pipeline may be higher than 12 Atm. The present invention was developed to allow the membrane to withstand pressures higher than 12Atm, and in some instances up to 30 Atm, without structural failure.

Such resistance to high pressures, is provided by use of a blind flange which mechanically supports the selective membrane, and by selection of a highly hydrophobic, non-porous composite membrane, which was deemed durable. Significant experimentation was necessary to identify an appropriate membrane able to withstand pressures over 12 Atm.

As a blind flange does not allow airflow therethrough, it was initially estimated that inclusion of a blind flange, would significantly hinder release of air and gas to a point of inefficiency. However, surprisingly, significant air release was measured through the selective membrane.

In the description below, the system of the invention is described in relation to municipal water pipelines that supply water for consumption. The system is not limited to this use and may be used to remove air or gasses from many other types of underground pipelines, including, but not limited to: wastewater pipelines, reclaimed water pipelines, desalination pipelines, or any underground pipeline.

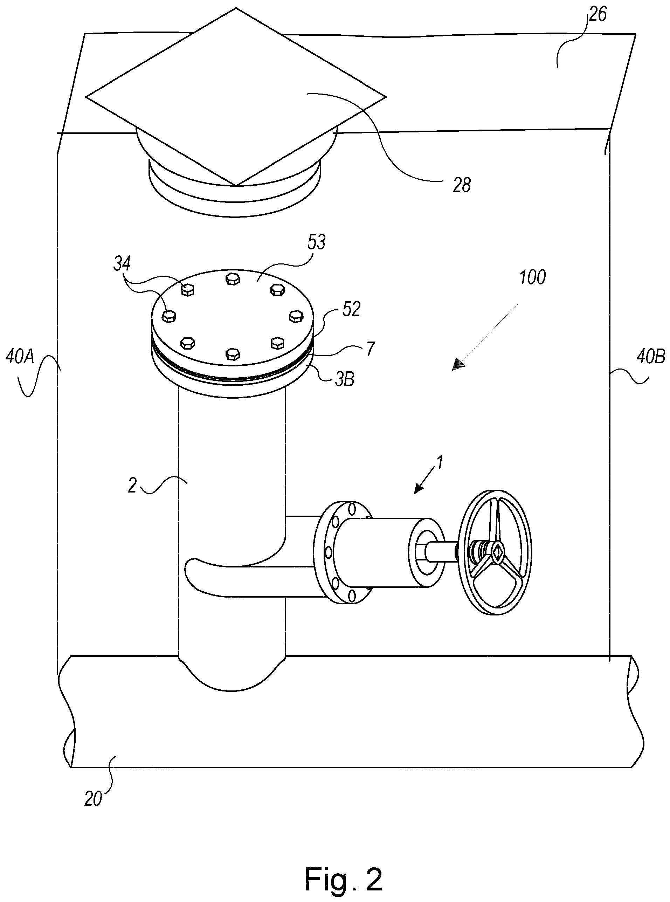

Referring to Figure 2, a presently preferred embodiment of the system 100 is shown.

System 100 is located underground within dugout pit 40A, 40B, and may be accessed by removal of inspection cap 28 which is supported level to the surface 26.

Central Water Pipeline 20 is located underground, parallel to the surface 26, and acts to supply water to consumers.

Rigid conduit 2 provides fluid and vapor communication between Central Water Pipeline 20 and Selectively Permeable Membrane 7 (Membrane 7 is located near the upper extremity of the System 100).

In a presently preferred embodiment, the Selectively Permeable membrane 7 selected for high-pressure pipelines 20, is a non-porous highly-hydrophobic membrane, specifically a PDMS, coated thin film composite membrane. Such membranes do not include pores, and prevent diffusion of water through the membrane, while allowing permeation of gasses therethrough.

Selectively Permeable Membrane 7 is held in place parallel to the Pipeline 20, by Blind Flange 53 and Lower Anchoring Rim 3B (flange with a lumen). Lower Anchoring Rim 3B is welded onto Rigid Conduit 2.

Blind flange 53 and Guard net 52 provide mechanical support to membrane 7, ensuring membrane durability for pipeline high pressures.

Guard net 52, is a spacer/support having a dense mesh, and may have pores of 25-150 microns, allowing substantial air permeability and gas permeation therethrough. Guard net 52 is located between Blind flange 53 and membrane 7. Guard net 52 may be formed of stainless steel, or plastic. In one instance (described in the Example), a guard net of stainless steel, having a thickness of 2mm, was used. Alternatively, the guard net may be made of fabric, such as a porous fabric membrane, which is present in addition to the selectively permeable membrane. Optionally, the porous fabric membrane of the guard net, is pre-treated to prevent biofouling, as enlarged upon below.

O-ring 42 provides sealing.

Valve 1 is provided, to be used during maintenance. During operation of system, valve 1 remains open. However, handwheel of valve 1 may be turned by a user in times of maintenance, to shutoff flow into rigid pipeline 2 from central water pipeline 20.

Blind flange 53 is typically located beneath ground at a depth of about 1-30 cm beneath the surface 26.

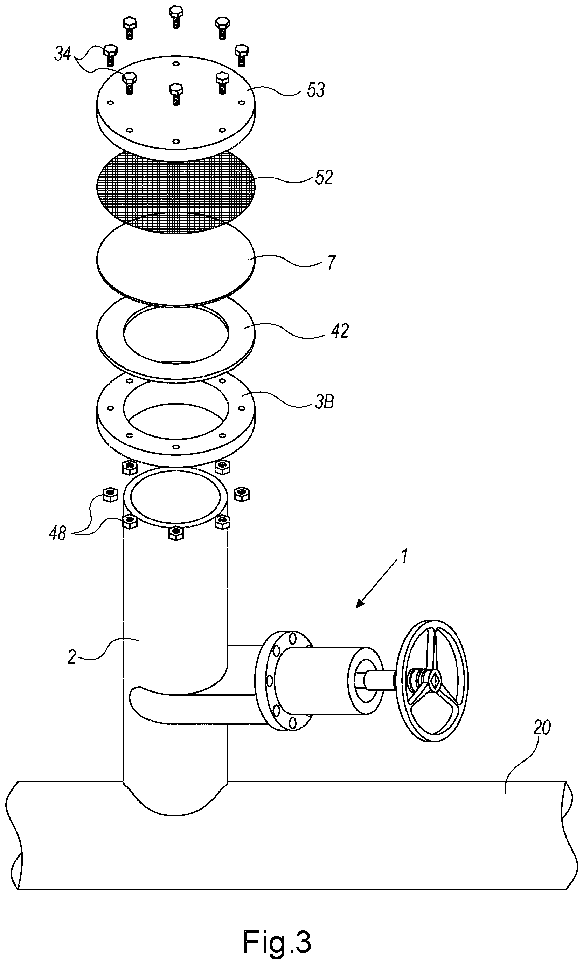

Membrane 7, Lower Anchoring Rim 3B and Guard net 52, are best shown and described in detail in Fig. 3 below.

Referring to Figure 3, an exploded view of the system 100 is shown.

Membrane 7 is typically flaccid, having a typical thickness in the range of 20-500 micron.

Selectively permeable membrane 7 is a non-porous separation membrane (such as previously known in the art for gas separation or separation of liquid organic solvents). The gas permeability is high enough to allow removal of any trapped air within one day. Membrane polymers that provide such properties are high free volume materials, including, but not be limited to, fluorinated polymers, or polysilynes such as PTMSP. Other materials are solvent stable hydrophobic polymers, such as polyphenylene oxide or polyphenylene sulfide, with or without various side groups. Additional features of the selectively permeably membrane 7, are enlarged upon below.

Membrane 7 may be coated to prevent passage of water therethrough, or to improve mechanical durability and prevent tearing.

During deployment of system, Membrane 7 is placed between sealing O-ring 42, and guard net 52. These are then placed above Lower Anchoring Rim 3B, with center of Membrane 7 located in lumen of Anchoring Rim 3B. Blind flange 53 is secured to lower anchoring rim 3B using bolts 34 which enter perforations on blind flange 53 and on lower anchoring rim 3B, and are held by nuts 48.

Excess membrane at the periphery of Membrane 7 may optionally include perforations to receive Bolts 34. Alternatively, Membrane 7 may be sized to fit over Lumen 50 of Anchoring Rim 3B, with minimal excess at the circumference, such that clamping and bolting of Anchoring Rim 3B to blind flange 53, secures Membrane 7 in place without perforating the circumference of Membrane 7.

Guard net 52 and Blind Flange 53 are placed above Membrane 7, to provide mechanical reinforcement for membrane and prevent adjacent earth from shifting and perforating the membrane. Bolts 34 are introduced into Holes on Anchoring Rim 3B and on Blind Flange 53. Bolts 34 are fastened using nuts 48, to clamp and hold Membrane 7 in place upon Rigid Conduit 2.

Selectively Permeable Membrane 7 is thus in fluid and vapor communication with the Rigid Conduit 2, with the underside of Membrane 7 placed above the lumen of Rigid Conduit, and the upper side of Membrane 7 facing towards the blind flange (belowground).

A gap of 1-30cm will typically be present between the upper side of Blind Flange 53 and the underside of inspection cap 28, allowing sufficient space for exit of air/gas into the underground environment.

The central water pipeline and the rigid conduit are preferably made of steel (such as galvanized steel). The anchoring rim, and guard net, may be made of steel or plastic.

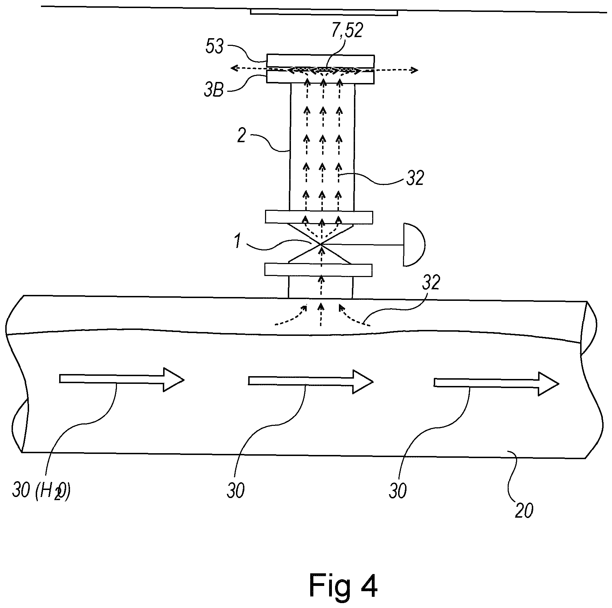

Referring to Fig. 4, airflow is shown during use of the invention. When present, unwanted air or gas bubbles 32 (dashed arrows), will be forced by water pressure, upwards into Rigid Conduit 2, passed Valve 1, towards Selectively Permeable Membrane 7. Due to the chemical and physical nature of the non-porous highly-hydrophobic membrane 7, air or gasses 32 may exit through the Membrane 7, while water is essentially prevented from exiting therethrough. Undesirable air or gasses are thus vented automatically and continuously as needed, below ground to the environment, via selectively permeable membrane, without waste of aboveground expensive real-estate.

Without being bound by theory, air or gas bubbles 32 are assumed to proceed through the guard net 52, and are measurable as they exit the perimeter of the guard net 52 beneath the blind flange 53, to the environment.

As blind flange 53 does not allow airflow therethrough, it was initially estimated that inclusion of the blind flange 53 would significantly hinder release of air and gas to a point of inefficiency. However, surprisingly, air release was measured in the Example below, to be 66.5 L/Hr. at varying pipeline pressures of up to 30Atm.

### EXAMPLE

To test durability of the invention at high pressures of pipeline, the blind flange embodiment described in relation to Figs. 2-4 was used, with pipeline pressures of 12-30Atm.

The membrane selected was a non-porous highly-hydrophobic membrane, formed of PDMS (poly dimethylsiloxane), present as a coated thin film composite membrane. More specifically, the active layer of the selective-permeable side of the membrane, which comes into contact with water flowing in the pipeline, is formed of Polyamide or Polyimide, at a thickness of about 60-200nm. This layer of the non-porous selective membrane is non-permeable to water, but is permeable to gaseous forms of at least He, CH₄, N₂, O₂, and CO₂. Above this is a layer of PPO (such as polyphenyl oxide or polybromo oxide at a thickness of 20µ) for mechanical strength, and a top layer of polyester at a thickness of 500-1000µ, for additional mechanical support.

The guard net was stainless steel dense mesh, with pores of 25-150 microns. The guard net overall thickness was 2mm.

The membrane was installed in a 6"diameter blind flange.

Successful airflow through the membrane and release to the environment, was measured as 66.5L/Hr, using varying pressures within the pipeline of up to 30Atm. The membrane remained structurally intact throughout the length of the experiment.

The magnitude of the airflow was surprising, given the use of a blind flange, which limits the upper surface area of the membrane that is in contact with the external environment.

Weekly visual inspections were conducted, to determine durability of the membrane over time. To date, the membrane was intact several weeks after installment, when checked immediately prior to filing.

### Selectively Permeable Membranes

The selectively permeable membrane component preferably has the following features:
Non- toxicity, non-allergenic, and in accordance with dietary and health regulations for drinking water.

The membrane preferably has mechanical strength to withstand pressure of 2-30 Atm.

The membrane is preferably resistant to particles that may occur in the pipeline (e.g., sand, soil, building materials), so that buildup of these particles does not occur upon the membrane (which could clog membrane pores), and the membrane has sufficient tensile strength to withstand tearing due to the presence of these particles.

The membrane is preferably resistant to biofouling (buildup of microorganisms). Optionally, one or more external coatings are applied to the membrane, to the guard net, or to an additional membrane, for these purposes, such as: antibacterial colloidal particles of silver or copper, carbon nanotubes, or polypeptides having anti-bacterial properties.

The membrane is preferably resistant to corrosion, and pH resistant (able to withstand pH values of 5-9) and resistant to the presence of chlorine (typically found around 0.5 PPM). The surface texture of the membrane is designed to lower friction (which would result in energy loss); the smoothness should be similar to that acceptable in pipeline materials.

The air flux should preferably be maximal, so that maximal air/gasses from within the pipeline are released through the membrane to the surrounding environment, while exit of water is prevented by the one-way nature of the membrane.

In a presently preferred embodiment, the selectively permeable membrane allows passage therethrough of non-polar gasses in various forms (oxygen, nitrogen, and carbon dioxide), while substantially preventing exit of water. Minute quantities of water or water vapor may be discharged via the membrane.

In some embodiments, the membrane allows bidirectional passage therethrough of non-polar gasses.

In one presently preferred embodiment, the permeability and diameter of the membrane is such to allow gaseous flow through the membrane of approximately 0.25 L air /1 km pipe / day, and said membrane diameter is selected to provide said flow therethrough.

In a presently preferred embodiment, the following non-limiting materials were used as selectively permeable membranes:
1. Silicone-Based Membranes (PDMS):
   a) Flat Sheet SSP-M823 manufactured by SSP Ltd. of Ballston Spa, NY, USA.
   b) Hollow Fiber membranes manufactured by PermSelect Ltd. of Ann Arbor, MI, USA.
2. Teflon-type membranes (PTFE) such as those manufactured by Sterlitech Ltd. of Auburn, WA USA.
3. Hydrophobic membranes (PVDF) manufactured by the Sigma-Aldrich subsidiary of Merck KGaA.
4. Hydrophobic PVDF selectively permeable membranes manufactured by Sigma-Aldrich subsidiary of Merck KGaA.
5. VVHP - hydrophobic Durapore.
6. Porous Polyethylene (pPE) membranes manufactured by Rayon Co. Ltd. (Tokyo, Japan) Mitsubishi.

Many additional materials may be suitable for use as selectively permeable membranes (or coatings), including the following non-limiting examples:
Chitin or Chitosan, GoreTex manufactured by Gore (PTFE also known as ePTFE), Tyvek (made of HDPE fibers, manufactured by Dupont), PerTex manufactured by Mitsui & Co.

In some instances, at least one side of this membrane is coated with an external coating, formed of a nonporous gas-permeable material.

In a presently preferred embodiment, non-porous hydrophobic membranes are used, such as would be acceptable for gaseous separation or for separation of liquid organic solvents, as these membranes can withstand pressures of up to 30 Bar. Examples include non-porous perfluorinated polymers, such as AF2400 manufactured by Compact Membrane Systems of Newport Delaware, USA. An additional example are solvent resistant membranes manufactured by SolSep B.V. of Apeldoorn, Netherlands.

In an alternative embodiment, the selectively permeable membrane is a porous hydrophobic membrane (optionally with a contact angle greater than 90 degrees). The mean pore size is 0.5 - 0.005 micron, optionally 0.2 micron or less. such that the liquid water entry pressure as defined by the Young-LaPlace or Cantor-LaPlace equation is 2-30 bar. Materials that can form such membranes can include, but are not limited to, PVDF and PTFE.

In one embodiment, the selective membrane of the invention comprises a porous support, having an external coating formed of a non-porous hydrophobic material.

According to a presently preferred embodiment, the selectively permeable membranes and remaining components of the system, are installed at recurring distances of 350-800 meters along the length of the pipeline.

When the diameter of the central water pipeline exceeds 24 inches, it may be necessary to install a cluster of selectively permeable membranes and associated system components. Alternatively, the distance between recurring units of the invention may be reduced, to be less than 350 meters between units. The distance between recurring units, may be individualized according to the specific geophysical needs at the installation site.

In some instances, prior art aboveground air release valves mounted on aboveground vertical pipes, are installed, in conjunction with the system of the present invention. In such case, use of the system will reduce the number of aboveground air release pipes needed, as compared to the prior art.

The membrane may have various shapes and sizes. The membrane may be rigid or flaccid.

Optionally, the system may include sensors for detection of water leakage, and a mechanism for triggering closure of an isolation valve when a leak is detected.

In summary, the system of the invention and its recurrent selectively permeable membranes, allow continuous passive release of air or gasses therethrough, underground, and alleviate the need for aboveground air release, thus granting savings in materials, space, and energy. The system is able to withstand pressures higher than 12Atm, and in some instances up to 30 Atm, without structural failure.

Having described the invention with regard to certain specific embodiments thereof, it is to be understood that the description is not meant as a limitation, as further modifications will now become apparent to those skilled in the art, and it is intended to cover such modifications as are within the scope of the appended claims.

## Claims

1. . A system for underground release of air or gas from underground pipelines, comprising:
a rigid conduit located underground, said rigid conduit providing fluid and vapor communication between an underground pipeline and between a selectively permeable membrane;
a selectively permeable membrane, located underground and secured at an upper region of said rigid conduit, said membrane in fluid and vapor communication with an underground pipeline, wherein said selectively permeable membrane allows passage of air and gas therethrough, while substantially prevents passage of aqueous fluids therethrough;
an impermeable mechanical support located in the vicinity above said selectively permeable membrane.

2. . The system of any of the preceding claims, wherein said impermeable mechanical support is a blind flange.

3. . The system of any of the preceding claims, wherein said selectively permeable membrane is formed of a material selected from: PTMSP, PVDF, PTFE, PDMS, VVHP, pPE, Chitin, Chitosan, HDPE, Pertex^{®}, polyphenylene oxide; polyphenylene sulfide.

4. . The system of any of the preceding claims, wherein said selectively permeable membrane is designed to withstand pressure higher than 12Atm.

5. . The system of any of the preceding claims, wherein said selectively permeable membrane is a non-porous separation membrane.

6. . The system of claim 5, wherein said selectively permeable membrane is a coated thin film composite membrane formed of PDMS (poly dimethylsiloxane), comprising:
an active selectively permeable layer, located facing towards the underground pipeline, said active selectively permeable layer formed of Polyamide or Polyimide, at a thickness of about 60-200nm;
at least one upper coating layer providing mechanical support to said active selectively permeable layer.

7. . The system of claim 5, wherein said selectively permeable membrane is a high free volume polymer material.

8. . The system of any of the preceding claims, wherein said selectively permeable membrane further comprises at least one coating selected from: a water resistance coating; and a coating that provides mechanical durability.

9. . The system of any of the preceding claims, further comprising a support member located above said selectively permeable membrane, wherein said support member provides mechanical reinforcement to said selectively permeable membrane; and said support member is a permeable guard net.

10. . The system of claim 9, wherein said guard net comprises a mesh, having pores of 25-150 microns providing air and gas permeation, and said guard net is formed of a material selected from: fabric, a plastic, and stainless steel.

11. . The system of claim 10, wherein said selectively permeable membrane, or said guard net, or an additional membrane, are coated to prevent biofouling, wherein said anti biofouling coating is selected from: antibacterial colloidal particles of silver; antibacterial colloidal particles of copper; carbon nanotubes; and anti-bacterial polypeptides.

12. . The system of any of the preceding claims, wherein said selectively permeable membrane allows passage therethrough of nitrogen and at least one of: oxygen, argon, and carbon dioxide.

13. . The system of any of the preceding claims, wherein the gas permeability and the diameter of said selectively permeable membrane is such to allow flow through the membrane of approximately 0.25 L air / 1 km pipe / day, and wherein said membrane diameter is selected to provide said flow therethrough.

14. . The system of any of the preceding claims, wherein said selectively permeable membrane is a porous hydrophobic membrane having a mean pore size of 0.5-0.005 micron.

15. . The system of claim 14, wherein at least one side of said membrane is externally coated with a coating formed of a nonporous gas-permeable material.
